# EUROPÄISCHE PATENTANMELDUNG

(11) **EP 2 544 326 A1**
(43) Veröffentlichungstag der Anmeldung: **09.01.2013**
(21) Anmeldenummer: 12004840.0
(22) Anmeldetag: 29.06.2012
(51) Int. Cl.: H02J 3/16, H02J 3/38

(54) **Photovoltaikanordnung**

(30) Priorität: 07.07.2011 DE 102011106877
(71) Anmelder: Adensis GmbH, 01129 Dresden (DE)
(72) Erfinder: Beck, Bernhard, 97332 Volkach, OT Dimbach (DE)

(57) **Zusammenfassung**

Die Erfindung betrifft eine Anordnung mit einem Photovoltaikgenerator (1), der an den Eingang eines Wechselrichters (3) anschließbar ist, dessen Ausgang mit einem Versorgungsnetz (12) verbunden ist. Die Anordnung umfasst weiterhin parallel zum Ausgang des Wechselrichters (3) eine Asynchronmaschine (7), die von einem Verbrennungsmotor (9) angetrieben ist.

## Beschreibung

Die Erfindung bezieht sich auf eine Anordnung mit einem Photovoltaikgenerator, der an einen ausgangsseitig mit einem Versorgungsnetz verbundenen Wechselrichters angeschlossen ist.

In der Praxis der öffentlichen Stromversorgung werden von den Energieversorgem üblicherweise enge Grenzen für den sogenannten cos phi Wert der Stromlieferanten und der Stromverbraucher gesetzt. Beispielsweise beträgt der zulässige Wert für einen sanktionslosen Blindleistungsbezug oder eine Blindleistungseinspeisung in Deutschland 0,95. Diese Maßnahme dient der Stabilisierung der Netze, um eine Überspannung, die zu einer Zerstörung von angeschlossenen Verbrauchern führen kann, und eine Unterspannung, die zu einem Versagen von Verbrauchern führen kann, zu vermeiden. So wird eine Einspeisung oder ein Bezug von Blindleistung außerhalb der von dem Energieversorger oder Obernetzbetreiber vorgegebenen Bandbreite für den cos phi mit Sanktionen in Form von Strafzahlungen belegt.

Als Anlagen zur Erzeugung elektrischer Energie sind beispielsweise Photovoltaikgeneratoren (PV-Generator) bekannt. Jeder PV-Generator erzeugt einen Gleichstrom, der mittels eines Wechselrichters in einen Wechselstrom umgewandelt wird. Als Wechselrichter sind Vorrichtungen anzusehen, welche aus einer Gleichspannung eine Wechselspannung erzeugen können. Die elektronischen Komponenten eines Wechselrichters erlauben die Einstellung eines gewünschten cos phi Wertes. Dies geschieht bei den meisten PV-Anlagen durch einen cos phi - Zeiger, über den ein festes Verhältnis von eingespeister Leistung zu eingespeister oder bezogener Blindleistung eingestellt werden kann. So wird der Regeleinheit z. B. vorgeschrieben, jegliche in das Netz eingespeiste Leistung mit einem cos phi von 0,97 einzustellen.

Zur Förderung der Netzstabilität eines Versorgungsnetzes ist es beispielsweise aus der DE 10 2007 018 683 A1 bekannt, eine Steuereinheit einzusetzen, um den Bezug oder die Abgabe von Wirk- oder Blindleistung aus dem bzw. in das Versorgungsnetz in Anhängigkeit von der Netzspannung einzustellen.

In einer Photovoltaikanlage (PV-Anlage) mit einem Wechselrichter besitzt dieser üblicherweise eine Nennleistung vorgegebener Größe, die an die Leistungsfähigkeit des PV-Generator bzw. der PV-Anlage angepasst ist. Die volle Auslastung des Wechselrichters ist nicht immer gegeben, da stets nur die Leistung verarbeitet werden kann, die der PV-Generator momentan zu liefern imstande ist.

Der Erfindung liegt die Aufgabe zugrunde, eine Blindleistungslieferung mittels eines Wechselrichters eines PV-Generators energieeffizient zu nutzen.

Diese Aufgabe wird erfindungsgemäß gelöst durch die Merkmale des Anspruchs 1. Vorteilhafte Ausgestaltungen und Weiterbildungen sind Gegenstand der Unteransprüche.

Hierzu ist erfindungsgemäß vorgesehen, dass dem Ausgang des Wechselrichters eines PV-Generators eine Asynchronmaschine parallel geschaltet, die von einem Verbrennungsmotor angetrieben ist.

Die Erfindung geht dabei von der Überlegung aus, dass zwar einerseits der Einsatz einer angetriebenen Asynchronmaschine zur Stromerzeugung und Einspeisung in ein Versorgungsnetz an sich nicht sinnvoll erscheint, zumal hierdurch - ungeachtet einer hohen Energieeffizienz - eine netzdestabilisierend Wirkung eintritt. So arbeitet eine Asynchronmaschine mit einem cos phi von ca. 0,8 und somit spannungssenkend, was für einen Netzbetreiber inakzeptabel ist, da dieser zur Aufrechterhaltung der Stabilität lediglich Werte von 0,95 für den cos phi zulässt, um die Spannung im Netz stabil zu halten.

Andererseits kann der vorhandene Wechselrichter des Photovoltaikgenerators dazu genutzt werden, den schlechten cos phi der Asynchronmaschine über eine Blindleistungslieferung mittels des Wechselrichters zu kompensieren. Unter dieser Voraussetzung könnte eine als Generator arbeitende Asynchronmaschine, die im Gegensatz zu einer Synchronmaschine keine aufwändige Netzankopplung erfordern und vergleichsweise preisgünstig ist, kostengünstig zur Stromeinspeisung herangezogen werden. Nun haben moderne Wechselrichter die Eigenschaft, dass diese über die Einstellung deren Arbeitspunktes zusätzlich zu oder auch anstelle von Wirkleistung ebenfalls Blindleistung in das Versorgungsnetz einspeisen oder aus dem Versorgungsnetz beziehen können. Andernfalls, also ohne die erfindungsgemäße Anbindung des Wechselrichters, müsste in eine aufwändige Blindleistungskompensationsanlage mit Spulen und/oder Kapazitäten investiert werden, was nicht wirtschaftlich ist.

Wird diese Eigenschaft des Wechselrichters einer PV-Anlage beispielsweise in Regionen genutzt, in denen insbesondere nachts, wenn keine Solarenergie zur Verfügung steht, ÖI zur Stromerzeugung herangezogen wird, kann bei der Verfeuerung des Öls der spezifische Verbrauch abgesenkt werden. Somit kann wiederum das eingesparte ÖI, anstelle dessen Umwandlung in Strom in sonnenreichen Region, in entfernte Gebiete transportiert und dort in Strom umgewandelt oder anderen, vergleichsweise energieeffizienten Verwendungen zugeführt werden.

Der Vorteil ist dabei insbesondere darin zu sehen, dass das eingesparte Öls anstelle des aufgrund bislang fehlender Leitungen nicht transportablen Stroms in andere, sonnenärmere Gebiete transportiert werden kann. Der derzeit aufgrund der fehlenden Stromtransferleitungen nicht durchführbare Transport des in sonnenreichen Regionen erzeugten oder erzeugbaren Stroms kann also ersetzt werden durch einen durchführbaren Transport von ÖI, wobei die Gesamtbilanz des Energieverbrauchs durch Ölverbrennung in Verbrennungsmaschinen gleich bleibt.

Die Vorteile der Anordnung mit deren Kombination einer Asynchronmaschine und eines Photovoltaik-Wechselrichters liegen daher insbesondere darin, dass
i) eine vorgebbare Leistung sicher und kontinuierlich zur Verfügung gestellt werden kann,
ii) die Photovoltaikanlage die Verbrennung von ÖI einspart,
iii) die Spannungsstabilität auch ohne Betrieb einer Maschine sichergestellt werden kann, und
iv) keine zusätzliche Kompensationsvorrichtung erforderlich ist.

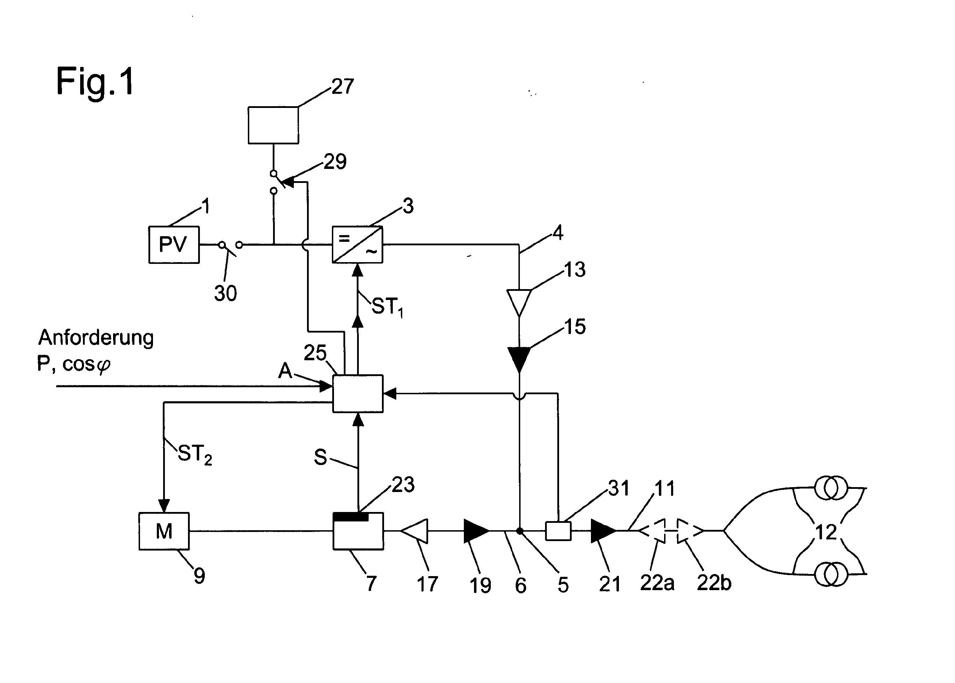

Weitere Vorteile und Ausgestaltungen der Erfindung ergeben sich aus der Beschreibung eines Ausführungsbeispiels anhand einer Zeichnung, deren einzige Figur einen schematischen Aufbau mit Leistungsflüssen der erfindungsgemäßen Anordnung zeigt.

Schematisch dargestellt ist ein Photovoltaikgenerator 1, der an einen nicht näher bezeichneten Eingang eines Wechselrichters 3 angeschlossen ist, der den vom Photovoltaikgenerator 1 erzeugten Gleichstrom in einen Wechselstrom umwandelt. Vom Wechselrichter 3 führt eine erste Zuleitung 4 zu einen Knotenpunkt 5, in den die Leistung eingespeist wird. An den Knotenpunkt 5 ist eine zweite Zuleitung 6 angeschlossen, die an den Ausgang einer Asynchronmaschine 7 geführt ist. Die Asynchronmaschine 7 wird von einer Verbrennungsmaschine 9, wie z. B. einem Dieselmotor, angetrieben und arbeitet somit als Asynchrongenerator. Von dem Knotenpunkt 5 führt eine Netzzuführungsleitung 11 über nicht gezeigte Trennschalter zu einem Versorgungsnetz 12, in welches der vom Photovoltaikgenerator 1 und von der Asynchronmaschine 9 erzeugte Strom eingespeist wird. Der Wechselrichter 3 ist somit einerseits ausgangsseitig über den Knotenpunkt 5 mit dem Versorgungsnetz 12 verbunden. Andererseits ist die Asynchronmaschine 7 parallel zum Wechselrichter 3, d. h. zu dessen nicht näher bezeichneten Wechselstrom-Ausgang angeordnet.

Die Figur zeigt auf der ersten Zuleitung 4 ein erstes Hohldreieck 13 und ein erstes Volldreieck 15. Das Hohldreieck 13 symbolisiert einen Blindleistungsanteil, der von dem Wechselrichter 3 in den Knotenpunkt 5 eingespeist wird. In analoger Weise symbolisiert das erste Volldreieck 15 den Wirkleistungsanteil. Eine Spitze beider Dreiecke 13, 15 ist jeweils auf die erste Zuleitung 4 gerichtet. Dies stellt den Leistungsfluss dar, der sowohl als Blindleistung als auch als Wirkleistung vom Photovoltaikgenerator 1 über den Wechselrichter 3 zum Kontenpunkt 5 führt.

Auf der zweiten Zuleitung 6 ist ein zweites Hohldreieck 17 gezeichnet, dessen Richtungsspitze zur Asynchronmaschine 7 weist. Dies symbolisiert, dass die Asynchronmaschine 7 einen Blindleistungsanteil bezieht. Die von dem aus dem Verbrennungsmotor 9 und der Asynchronmaschine 7 gebildeten Maschinensatz erzeugte Wirkleistung wird ebenfalls in den Knotenpunkt 5 eingespeist, was durch ein zweites Volldreieck 19 symbolisiert ist.

Der vom Wechselrichter 3 erzeugte Blindleistungsanteil ist derart auf den Blindleistungsbezug der Asynchronmaschine 7 abgestimmt, dass der Leistungsfluss auf der Netzzuführungsleitung 11 bevorzugt reine Wirkleistung ist. Dies ist durch ein drittes Volldreieck 21 auf der Netzzuführungsleitung 11 symbolisiert, dessen Spitze in Richtung des Versorgungsnetzes 12 zeigt. Sollte vom Netzbetreiber zusätzlich eine Blindleistungskomponente gewünscht sein, so kann ein Blindleistungsbezug aus dem oder eine Blindleistungseinspeisung in das Versorgungsnetz durch Veränderung der Arbeitspunkteinstellung erfolgen. Dies ist durch zwei gestrichelt gezeichnete Hohldreiecke 22a und 22b für den Bezug bzw. für die Einspeisung dargestellt.

Die Asynchronmaschine 7 weist einen Signalausgang 23 auf, an welchen eine Signals leitung angeschlossen ist, die zu einer Steuer- und Regeleinheit 25 führt. Über die Signalleitung wird ein Signal S übertragen, welches ein Maß für den cos phi ist, mit dem die Asynchronmaschine 7 momentan arbeitet. In der Steuer- und Regeleinheit 25 wird ein Steuersignal ST₁ generiert, welches die im Wechselrichter 3 inhärent enthaltenen Halbleiterschalter, insbesondere in Form von IGBT's, derart ansteuert, dass der seitens des Wechselrichters 3 gelieferte Anteil an Blindleistung gleich demjenigen ist, den die Asynchronmaschine 7 bezieht. Auf diese Weise kann die Leistung auf der Netzzuführungsleitung mit einem cos phi von 1 übertragen werden. Bei einer anderen Anforderung mit einem gewünschten cos phi Wert ungleich 1 weicht der vom Wechselrichter 3 generierte Blindleistungsanteil von dem durch die Asynchronmaschine 7 bezogenen Wert entsprechend ab.

Die Steuer- und Regeleinheit 25 ist über eine Steuerleitung mit dem Verbrennungsmotor 9 verbunden, über die ein Steuersignal ST₂ übertragen wird, mittels dessen die Leistung des Motors 9 eingestellt wird.

Es ist sinnvoll, eine schnelle Leistungslieferung zur Verfügung stellen zu können, um die Zeitspanne zu überbrücken, die die Verbrennungsmaschine 9 mit dem Asynchrongenerator 7 nach einer entsprechenden Anforderung seitens des Netzbetreibers benötigt, um Leistung in das Versorgungsnetz 12 einzuspeisen. Dazu ist parallel zum Photovoltaikgenerator 1 eine Batterie 27 geschaltet, die bei Bedarf über eine erste Schaltvorrichtung 29 an die Eingangsseite des Wechselrichters 3 geschaltet werden kann. Die Batterie 27 speist zusätzlich zum (oder bei Nacht anstelle vom) Photovoltaikgenerator 1 elektrische Energie in den Wechselrichter 3 ein, bis der aus dem Asynchrongenerator 7 und dem Verbrennungsmotor 9 bestehende Maschinensatz hochgefahren ist. Nach erfolgtem Hochfahren stellt der Maschinensatz 7, 9 anstelle der Batterie 27 dem Versorgungsnetz 12 die gewünschte elektrische Leistung zur Verfügung.

Mittels einer zweiten Schaltvorrichtung 30 kann der Photovoltaikgenerator 1 von dem Wechselrichter 3 getrennt werden. Die geöffnete zweite Schaltvorrichtung 30 dient dazu, beispielsweise bei Nacht einen Rückstrom in den Photovoltaikgenerator 1 zu vermeiden, wenn die Batterie 27 mit der Eingangsseite des Wechselrichters 3 verbunden ist.

Zusammenfassend ist somit eine Anordnung mit einem Photovoltaikgenerator 1 bereitgestellt, der an den Eingang bzw. an die Eingangsklemmen eines Wechselrichters 3 anschließbar ist, dessen Ausgang mit einem Versorgungsnetz 12 verbunden ist, wobei parallel zum Ausgang eine von einem Verbrennungsmotor 9 angetriebene Asynchronmaschine 7 angeordnet ist. Der Vorteil der erfindungsgemäßen Anordnung besteht insbesondere darin, dass der Einsatz von Asynchronmaschinen ermöglicht ist, obwohl diese an sich mit einem ungünstigen cos phi Wert arbeiten. So lässt sich der ungünstigen cos phi mittels des Wechselrichters 3, insbesondere mittels dessen elektronisch eregelter IGBT's, kompensieren.

### Bezugszeichenliste

- 1: Photovoltaikgenerator
- 3: Wechselrichter
- 4: erste Zuleitung
- 5: Knotenpunkt
- 6: zweite Zuleitung
- 7: Asynchronmaschine
- 9: Verbrennungsmaschine
- 11: Netzzuführungsleitung
- 12: Versorgungsnetz
- 13: erstes Hohldreieck
- 15: erstes Volldreieck
- 17: zweites Hohldreieck
- 19: zweites Volldreieck
- 21: drittes Volldreieck
- 22a: gestr. Hohldreieck (Bezug)
- 22b: gestr. Hohldreieck (Einspeisung)
- 23: Signalausgang
- 25: Steuer- und Regeleinheit
- 27: Batterie
- 29: erste Schaltvorrichtung
- 30: zweite Schaltvorrichtung
- 31: Messstelle
- S: cos phi - Signal
- ST₁: Steuersignal
- ST₂: Steuersignal

## Patentansprüche

1. Anordnung mit einem Photovoltaikgenerator (1), der an einen Eingang eines Wechselrichters (3) angeschlossen ist, dessen Ausgang mit einem Versorgungsnetz (12) verbunden ist, wobei parallel zum Ausgang des Wechselrichters (3) eine von einem Verbrennungsmotor (9) angetriebene Asynchronmaschine (7) geschaltet ist.

2. Anordnung nach Anspruch 1, wobei parallel zum Eingang des Wechselrichters (3) eine Batterie (27) geschaltet ist.

3. Anordnung nach Anspruch 1 oder 2, wobei eine Leistungsnetzeinspeisung seitens des Photovoltaikgenerators (1) und der Asynchronmaschine (7) mit einem vorwählbaren cos phi und/oder einer vorgebbaren Leistung erfolgt.

4. Anordnung nach Anspruch 3, wobei in Summe eine Leistungseinspeisung seitens des Photovoltaikgenerators (1) und der Asynchronmaschine (7) mit einem cos phi in Höhe von 0,99 bis 1 erfolgt.

5. Anordnung nach Anspruch 1 oder 2, wobei bei ausgeschalteter Asynchronmaschine (7) der Wechselrichter (3) mit einem vorgegebenen cos phi mit dem Versorgungsnetz (12) verbunden ist und aus diesem Blindleistung bezieht oder in dieses einspeist.

6. Anordnung nach einem der Ansprüche 3 bis 5, mit einer Steuer- und Regeleinheit (25), die anhand eines Anforderungssignals (A) die Leistung des Verbrennungsmotors (9) steuert und den cos phi des Wechselrichters (3) einstellt.

7. Anordnung nach Anspruch 6, wobei der Steuer- und Regeleinheit (25) von einer Messstelle (31) im Versorgungsnetz (12) die Istwerte des eingespeisten Stroms (I) und der herrschenden Netzspannung (U) zugeführt sind, um diese mittels im Anforderungssignal (A) enthaltener Sollwerte zu regeln.
